# EUROPÄISCHE PATENTSCHRIFT

(11) **EP 0 915 553 B1**
(45) Veröffentlichungstag und Bekanntmachung des Hinweises auf die Patenterteilung: **15.02.2006**
(21) Anmeldenummer: 98120410.0
(22) Anmeldetag: 28.10.1998
(51) Int. Cl.: H02K 1/16, H02K 41/02

(54) **Linearmotor**
Linear motor
Moteur linéaire

(30) Priorität: 10.11.1997 DE 19749609
(43) Veröffentlichungstag der Anmeldung: 12.05.1999
(73) Patentinhaber: SIEMENS AKTIENGESELLSCHAFT, 80333 München (DE)
(72) Erfinder: Huth, Gerhard, Dr.-Ing., 97618 Leuterhausen (DE)

(56) Entgegenhaltungen:
- DE-A- 2 835 386
- DE-A- 4 002 714
- DE-A- 4 124 166
- DE-A- 4 241 085
- DE-A- 4 326 124

## Beschreibung

Die Erfindung betrifft einen Linearmotor.

Aus der Offenlegungsschrift DE 42 41 085 A1 ist ein Linearmotor bekannt, dessen Stator Nuten zur Aufnahme von Formspulen aufweist. Die Fixierung der Formspulen in den Nuten erfolgt durch vorgefertigte Zahnkopfelemente. Die Gestaltung dieser Art der Fixierung ist konstruktiv sehr aufwendig. Außerdem können Biegevorgänge zu Beschädigungen der Formspulen führen. Aus der Fachliteratur "Wicklungen für flache Ständer und Scheibenläufer" von H. Sequenz (Seite 284f) ist eine Zweischichtwicklung bekannt, die auf einen Stator aufgebracht wird und als ganzes imprägniert wird. Eine Anpassung an eine geänderte Aufgabenstellung des Linearmotor ist nicht möglich.

Der Erfindung liegt die Aufgabe zugrunde, einen Stator eines Linearmotors zu schaffen, der modular aufgebaut, jederzeit erweiterbar und einfach zu fertigen ist. Außerdem soll der Stator für jegliche Art von Wicklung geeignet sein.

Die Lösung der gestellten Aufgabe gelingt durch folgende Merkmale:
- Ständerzähne, die einzeln oder blockweise zusammengesetzt ein Ständerblechpaket bilden.
- Vorgefertigte Spulen als zu Zahnspulen entartete phasenreine Bruchlochwicklungen.
- mit Spulen bestückten Ständerzähnen, welche Spulen am jeweiligen Ständerzahn und/oder Ständerblechpaket fixiert sind.

Durch die Verwendung von Zahnspulen in Verbindung mit einzelnen oder blockweise verbundenen Ständerzähnen, kann der Linearmotor modular aufgebaut und bei Bedarf durch weitere Module ergänzt werden. Dabei sind die Ständerzähne oder die Module durch nut- und federähnliche Verbindungsarten mechanisch und magnetisch gekoppelt. Die Fixierung der Zahnspulen mit den Statorzähnen kann stoffschlüssig erfolgen, so daß damit gleichzeitig eine Imprägnierung der Zahnspulen erfolgt. Die stoffschlüssige Verbindung der Zahnspulen mit den Statorzähnen führt während des Herstellungsvorganges zu einer gegenüber herkömmlichen Herstellungsarten von Linearmotoren enormen Zeitersparnis. Ebenso kann die Fixierung reib- oder formschlüssig erfolgen, z. B. durch schwalbenschwanzartig ausgebildete Zahnkopfelemente. Die Zahnkopfelemente selbst, können geblecht oder ganzstückig ausgeführt sein, wobei die ganzstückig ausgeführten Zahnkopfelemente aus einem Eisenkompositwerkstoff bestehen.

Durch eine vorteilhafte Ausbildung der Erfindung in drei Strangmodule mit jeweils drei Zahnspulen, kann für einen dreiphasigen Netzanschluß die Polpaarzahl von acht oder zehn eingestellt werden. Da aus Gründen der magnetischen Ausnutzung die Spulenweite etwa einer Polteilung und damit die Nutenzahl ungefähr der Polzahl entsprechen sollte, ergibt sich bei einem dreisträngigen Linearmotor mit neun Zähnen demzufolge eine nutzbare Grundpolzahl von acht oder zehn. Die gewünschte Grund-Polzahl wird von einem vorzugsweisen permanentmagneterregten Reaktionsteil des Linearmotors wiederholt.

In einer schematisch dargestellten Zeichnung wird die Erfindung näher erläutert. Es zeigen:
- FIG 1: Einzelne miteinander verbundene Statorzähne mit Zahnspulen,
- FIG 2: Prinzipschaltbild eines Wicklungsstranges,
- FIG 3: Längsschnitt eines Stators bestehend aus neun Nuten und drei Strangmodulen.

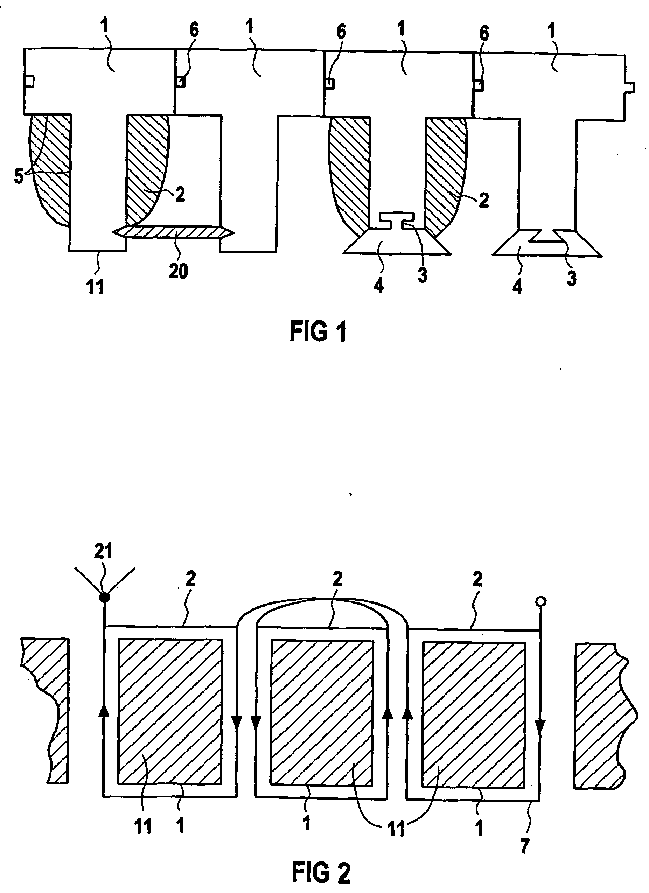

FIG 1 zeigt einzelne geblechte Statorzähne 1 eines bewegbaren Kurzstators mit Zahnspulen 2, die reibschlüssig oder durch schwalbenschwanzartig ausgebildete Verbindungen 3 der Statorzahnfüße 4 befestigt sind. Eine Fixierung der Zahnspulen 2 kann auch durch Nutverschluteile 20 erreicht werden. Eine stoffschlüssige Verbindung 5 der Zahnspule 2 mit dem Statorzahn 1 dient außerdem der Imprägnierung der Zahnspule 2. Die Imprägnierung umfaßt nicht die Stirnseite 11 des Statorzahnes 1 ,die einem nicht näher dargestellten Rotor gegenüberliegt.

Die einzelnen Statorzähne 1 können durch Nut- und Federverbindungen 6 oder auch andere allgemein bekannte Verbindungstechniken modular aneinandergereiht werden. Durch die mechanische Aneinanderreihung 6 der Statorzähne 1 ergibt sich ein magnetisches Rückflußjoch.

FIG 2 zeigt das Prinzipschaltbild eines Wicklungsstranges 7 aus Sicht des nicht näher dargestellten Rotors mit in Reihe geschalteten Zahnspulen 2, die durch Stoffschluß 5 an den Ständerzähnen 1 befestigt sind. Die dem Rotor zugewandten Stirnseiten 11 der Ständerzähne 1 sind frei von Imprägniermaterialien. Die Ständerzähne 1 dieses Wicklungsstranges 7 sind entweder wie in Figur 1 zusammengesetzt, oder die Blechschnitte bilden "dreizähnige" Gebilde 8. Die ein- bzw. dreizähnigen Module eignen sich somit für einen dreiphasigen elektrischen Aufbau L1,L2,L3. Der Sternpunkt eines derartigen dreiphasigen Aufbaus ist mit 21 gekennzeichnet. Die Energiezufuhr auch während der Linearbewegung des Kurzstators erfolgt über nicht dargestellte Kabelschleppen.

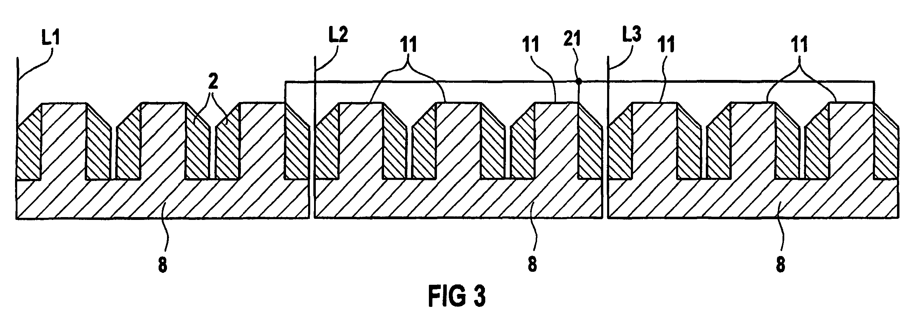

FIG 3 zeigt einen bewegbaren Kurzstator mit neun Nuten und drei Strangmodulen 8, dessen Ständerzähne 1 jeweils ein dreizähniges Gebilde 8 darstellen und dessen Zahnspulen 2 gemäß der in Figur 2 aufgezeigten Verschaltung verbunden sind. Diese Ausführungsform gestattet einen dreiphasigen Netzanschluß L1, L2, L3 mit guter Ausnutzung des magnetischen Materials, da die Nutenzahl "neun" ungefähr der Polzahl "acht" oder "zehn" entspricht.

## Patentansprüche

1. Linearmotor, mit folgenden Merkmalen:
a) Ständerzähne (1), die einzeln oder blockweise zusammengesetzt ein Ständerblechpaket bilden,
b) vorgefertigte Spulen,
c) mit Spulen bestückten Ständerzähnen, welche Spulen am jeweiligen Ständerzahn (1) und/oder Ständerblechpaket fixiert sind, **gekennzeichnet durch** als zu Zahnspulen (2) entarteten phasenreinen Bruchlochwicklungen.

2. Linearmotor nach Anspruch 1, **dadurch gekennzeichnet, daß** sich das gesamte Ständerblechpaket aus abschnittsweise mechanisch und magnetisch verbundenen Ständerzähnen (1) zusammensetzt, die blockweise jeweils ein elektrisch und mechanisch unabhängiges Strangmodul (8) bilden.

3. Linearmotor nach Anspruch 2, **dadurch gekennzeichnet, daß** die Zahnspulen (2) jedes Strangmoduls (8) in Reihe geschaltet sind und daß die in Reihe geschalteten Zahnspulen (2) mit den Ständerzähnen (1) stoffschlüssig und/oder durch Ständerzahnfüße (4) oder Nutverschlußteile (20) reibschlüssig und/oder formschlüssig verbunden sind.

4. Linearmotor nach Anspruch 3, **dadurch gekennzeichnet, daß** das Ständerblechpaket aus drei Strangmodulen (8) mit neun Nuten und den darin fixierten, je Strang in Reihe geschalteten Zahnspulen (2) besteht.

## Claims

1. Linear motor with the following features:
a) stator teeth (1) which form a stator lamination packet individually or in a block by block assembly,
b) prefabricated coils
c) stator teeth equipped with coils, said coils being fixed to the respective stator tooth (1) and/or stator lamination packet, **characterised by** fractional slot windings free of phase shift and degenerated to tooth-wound coils (2).

2. Linear motor according to claim 1, **characterised in that**, the complete stator lamination packet is made up of sections of mechanically and magnetically connected stator teeth (1), each forming an electrically and mechanically independent phase module (8) block by block.

3. Linear motor according to claim 2, **characterised in that**, the tooth-wound coils (2) of each phase module (8) are connected in series and that the series connected tooth-wound coils (2) are connected to the stator teeth (1) by material locking and/or are connected by means of stator tooth bases (4) or groove sealing elements (20) by frictional and/or positive locking.

4. Linear motor according to claim 3, **characterised in that**, the stator lamination packet comprises three phase modules (8) with nine grooves and the tooth-wound coils (2) fixed therein and connected in series for each phase.

## Revendications

1. Moteur linéaire ayant des caractéristiques suivantes :
a) des dents (1) de stator, qui forment individuellement ou rassemblées par bloc un paquet de tôles statoriques ;
b) des bobines préfabriquées ;
c) des dents de stator équipées de bobines, lesquelles bobines sont immobilisées sur, respectivement, une dent de stator et/ou sur un paquet de tôles statoriques, **caractérisé par** des enroulements à nombre fractionnaire d'encoches par pôle et par phase, exempts de déphasage dégénérés en bobines (2) à dents.

2. Moteur linéaire suivant la revendication 1, **caractérisé en ce que** tout le paquet de tôles statoriques est composé de dents (1) de stator reliées mécaniquement et magnétiquement partie par partie qui forment bloc par bloc, respectivement, un module (8) de phase indépendant électriquement et mécaniquement.

3. Moteur linéaire suivant la revendication 2, **caractérisé en ce que** les bobines (2) à dents de chaque module (8) de phase sont montées en série et **en ce que** les bobines (2) à dents montées en série sont reliées à coopération de matière aux dents (1) du stator et/ou à complémentarité de frottement et/ou à complémentarité de forme par des pieds (4) de dents de stator ou par des parties (20) de fermeture d'encoche.

4. Moteur linéaire suivant la revendication 3, **caractérisé en ce que** le paquet de tôles statoriques est constitué de trois modules (8) de phase ayant neuf encoches et des bobines (2) à dents qui y sont immobilisées et qui sont montées en série par phase.
